**Europäisches Patentamt**

**European Patent Office**

**Office européen des brevets**

(19)

(11) Publication number : **0 335 484 B1**

## EUROPEAN PATENT SPECIFICATION

(12)

(45) Date of publication of patent specification :
02.12.92 Bulletin 92/49

(51) Int. Cl.$^5$ : **C08F 210/06,** C08F 4/64,
C08F 210/08

(21) Application number : **89301131.2**

(22) Date of filing : **06.02.89**

(54) Propylene copolymerisation process.

(30) Priority : **30.03.88 US 175006**

(43) Date of publication of application :
**04.10.89 Bulletin 89/40**

(45) Publication of the grant of the patent :
**02.12.92 Bulletin 92/49**

(84) Designated Contracting States :
**AT BE DE ES FR GB IT NL SE**

(56) References cited :
**EP-A- 0 135 358**
**EP-A- 0 251 771**

(72) Inventor : **Pellon, Brian J.**
**3942 Lyndale Drive**
**Odessa Texas 79762 (US)**
Inventor : **Allen, George C.**
**16 Tanglewood**
**Odessa Texas 79761 (US)**
Inventor : **Hughes, Michael P.**
**2800 Teakwood**
**Odessa Texas 79761 (US)**

(74) Representative : **Cresswell, Thomas Anthony et al**
**J.A. Kemp & Co. 14 South Square Gray's Inn**
**London WC1R 5EU (GB)**

(73) Proprietor : **REXENE PRODUCTS COMPANY (A Delaware Corporation)**
**2400 South Grandview Avenue**
**Odessa Texas 79766 (US)**

Jouve, 18, rue Saint-Denis, 75001 PARIS

## Description

The present invention relates to a process for producing substantially amorphous propylene-butene-1 copolymers.

In the manufacture of propylene homopolymers and copolymers, conventional polymerization techniques using unsupported catalysts result in the simultaneous production of substantial quantities of atactic polymer in addition to the desired product of high crystallinity and isotacticity. Various methods have been employed for the purification and separation of these two polymers. The by-product, i.e. the atactic polymer of low crystallinity, is being utilized commercially as a component in various adhesive compositions, roofing materials, caulking compounds, etc.

Recently, developments have been made of new catalysts which are highly active and more stereospecific than the afore-mentioned conventional catalysts. The proportions of atactic polymer in the polymers produced employing these catalysts are substantially reduced and therefore the polymer product generally does not require any purification for removal of the atactic or low crystalline polymer. Because of the rapid adoption in existing polymer facilities of these new catalysts, there has been generated a serious shortage of low-crystalline, atactic polymers.

US Patent No. 3,923,758 to Carter, Jr. et. al. discloses a high pressure-high temperature solution process for the production of amorphous copolymers of propylene and butene-1 in the presence of a catalyst which is a combination of aluminium trialkyl and titanium trichloride. The activity of the catalyst is undesirably low ranging only between about 200 and about 700 kg. polymer/kg. of Ti catalyst/hour resulting in extremely low productivity. Also, the equipment and utilities costs are unacceptably high, e.g., because of the required solvent removal and recovery, and of the higher reactor temperature and pressure requirements. In summary, the process is not economically feasible.

It is therefore an object of the present invention to provide an economical, highly efficient process for the production of substantially amorphous polymers of propylene and butene-1.

In accordance with the present invention there is provided a process for producing substantially amorphous propylene/butene-1 copolymers which comprises reacting from 15 to 90 wt.% propylene and from 85 to 10 wt.% butene-1 at a temperature from 55°C (130°F) to 60°C (140°F) and at a reactor pressure sufficient to maintain the monomers in the liquid phase, in the presence of from 0.7 to 3.0 mol% hydrogen based on the monomer feed to the process and employing as catalyst a composition of:

(a) a solid catalyst component obtainable by

(i) co-comminuting magnesium halide support base and aluminium trihalide in a molar ratio from 8:0.5 to 8:3 in the absence of added electron donor and

(ii) then co-comminuting the product of step (i) in the absence of added electron donor with sufficient titanium tetrahalide to provide a molar ratio of magnesium halide to titanium tetrahalide from 8:0.4 to 8:1; and

(b) a trialkylaluminium co-catalyst component having from 1 to 9 carbon atoms in each alkyl group in a sufficient quantity to provide an A1/Ti ratio in the range from 50:1 to 700:1;

and recovering a substantially amorphous, random propylene/butene-1 copolymer.

Preferably, all the halides used in forming the catalyst composition are chlorides and all the alkyl groups are ethyl groups. The invention will be described hereinafter in connection with the preferred embodiments of the catalyst system; analogous considerations apply to the use of other catalyst systems within the above definition.

Although the polymerization can be carried out in a batch reactor, it is preferred to utilize a continuous process to achieve the most random incorporation of the comonomer. Usually, pressures in the range from 1.5MPa (200 psig) to 3.5MPa (500 psig) are suitable for maintaining the monomers in liquid phase.

It is important not to exceed the very narrow temperature of 55 to 60°C (130°F to 140°F) to minimize the amount of low molecular weight material produced, which detrimentally affects product properties such as needle penetration.

The polymerization is carried out in a stirred reactor at average residence times between about 1 hour and about 3 hours. Sufficient catalyst quantities are fed to the reactor to result in a polymer content in the reactor slurry of from 10 wt.% to 50 wt.%. Especially at the higher end of this range it may be necessary for improved reactor control to add to the reactor from 50 to 100 ppm based on the total monomer feed of an antifoaming agent such as a polydimethylsiloxane. The reactor effluent is withdrawn from the reactor, and unreacted monomer and hydrogen is flashed from the product polymer.

In one preferred embodiment of the process of this invention from 55 to 65 wt.% propylene is reacted with from 35 to 45 wt.% butene-1. The resulting product will have a softening point between 93°C (200°F) and 110°C (230°F), for instance between 105°C (220°F) and 110°C (230°F), and a needle penetration between about 20 and about 30 dmm (1 dmm = 0.1mm). Such a polymer has a particular use as a base polymer in hot melt adhesives.

The hydrogen is added to the polymerization reactor for control of polymer molecular weight and other properties at concentrations generally about 7 to 10 times the amount conventionally used in the manufacture of isotactic polymer. The concentration of hydrogen in the total feed to the reaction zone preferably ranges from 1.2 to 2.5 mol%.

The solid, supported catalyst component should have a molar ratio of magnesium chloride to aluminium chloride of from 8:0.5 to 3.0 and preferably from 8:1.0 to 1.5.

The molar ratio of magnesium chloride to titanium tetrachloride is from 8:0.1 to 1.0 and preferably from 8:0.4 to 0.6. A critical feature of the solid supported catalyst component is that no electron donor compounds should be used in any of the catalyst manufacturing steps. Also, the polymerization process using the catalyst should be carried out in the absence of added electron donors.

Any of the general methods described in US Patents Nos. 4,347,158 and 4,555,496 can be used in preparing the solid supported catalyst component except that these methods must be modified to exclude the use of electron donor compounds. Briefly, the modified method involves co-comminuting magnesium chloride and aluminium trichloride in the absence of an electron donor and then co-comminuting the catalyst support so formed with titanium tetrachloride, also in the absence of an electron donor.

The solid catalyst component is used in conjunction with a trialkylaluminium co-catalyst, preferably triethylaluminium. The molar ratio of trialkylaluminium co-catalyst to titanium-containing catalyst component, i.e., A1/TI ratio, should range from 50:1 to 700:1, preferably from 90:1 to 300:1.

The specific catalyst used in the process of this invention has the ability to produce propylene units in the polymer with little or no control of the stereochemistry, and also to incorporate butene-1 as randomly as possible to provide maximum disorder in the polymer chain.

Because of the high activity of this catalyst, the process is highly efficient and typically results in polymer productions of at least ranging from 4000 to over 20,000 kg polymer/kg Ti catalyst/hour. Also, because of the relatively low temperature and pressure requirements in the process as well as the absence of a solvent recovery step, the process costs, i.e. equipment and utilities costs, are much lower than any prior art process.

The novel polymer has a low heat of fusion, as determined by Differential Scanning Calorimetry techniques (DSC), an indication of the amorphous nature of the polymer and the lack of significant crystallinity in the polymer structure.

The polymer contains very low concentrations of catalyst residues, e.g., the total ash content is generally less than about 1000 ppm and the titanium content no more than about 4 ppm and generally less than about 2 ppm.

Various additives can be incorporated into the polymer such as antioxidants, U.V. stabilizers and pigments.

The polymer products of the process of this invention have excellent properties making them useful in a variety of applications, such as blending components for adhesives, caulking and sealing compounds, roofing compositions, and others. By varying the comonomer content in the polymer and hydrogen addition to the reactor, it is possible to tailor the properties for any desired application. The important product properties include melt viscosity, ring and ball softening point, needle penetration, and open time.

The melt viscosity at 190.5°C (375°F) is determined by ASTM test method D-3236 using a Brookfield RVT Viscometer and a No. 27 spindle. Hydrogen is used to control molecular weight and thus melt viscosity. For hot melt adhesives the desired viscosity range is between about 1000 and 8000 mPa s at 190.5°C (375°F). For other applications such as bitumen-modified product, the polymer should have a viscosity above 5000 mPa s.

The ring and ball softening point determination is carried out using ASTM E-28 test method. The variable affecting the softening point is butene-1 content of the polymer. A decrease in the butene-1 content causes an increase in the ring and ball softening point. The preferred range for this property is from 83°C (180°F) to 143°C (290°F).

Needle penetration is another test which measures the softness of the material at ambient temperature, in this case by the resistance to penetration according to ASTM test method D-1321. Typically, the penetration values of the copolymers of this invention range between 5 and 50 dmm 1 dmm = 0.1 mm). Butene-1 content affects this property as in the case of ring and ball softening point; however, in this case a decrease in butene-1 content causes a decrease in needle penetration.

One important test of a hot melt adhesive is the open time. This test is an indication of the elapsed time available between adhesive application to kraft paper and bonding of a kraft paper laminate. This is a very important property for the user, as he must know how soon after applying the adhesive he must add the second sheet of paper. In this test, a sheet 21.5 cm x 28 cm (8.5″ x 11″) of kraft paper, rough side up, is taped to a drawdown plate. A polymer sample is heated to 190.5°C (375°F) along with a Bird drawdown applicator. When at temperature, the applicator is placed at the top of the kraft paper and a small puddle of molten polymer is poured near the edge. The polymer is drawn into a smooth film, and as soon as the bottom of the paper is reached, a stopwatch is started. At 10-second intervals, pre-cut strips of kraft paper (rough side down transverse machine direction) are placed across the film and pressed into place with a rubber roller. After the last strip is applied, and a subsequent waiting period of 5 minutes, the strips are removed in a smooth, brisk motion. The open time is defined as the longest time when 90% or more of the fiber remains bonded. The open times should preferably range from 10 to 60 seconds.

The following examples illustrate the invention.

## EXAMPLES 1-4

The experiments were performed in a l-liter, jacketed autoclave equipped with a magnetically coupled stirrer. The temperature of the autoclave was controlled by the use of a mixture of equal weights of glycol and water as the heat transfer fluid flowing through the jacket. The temperature of this fluid was controlled by a microprocessor whose temperature indicator was an iron/constantin thermocouple inside the autoclave. With this system, set point temperature could be maintained ± 0.2°C. All monomers were polymerization grade, 99.9% pure, and were also passed through molecular sieve beds, as well as beds of copper catalyst for oxygen removal, prior to use. Hydrogen was ultra-high purity, 99.99% and used as is. Aluminium alkyl solutions were purchased as 25% W/W in normal heptane and were used as is. The solid supported titanium tetrachloride catalyst component had a titanium content of about 2.5 wt.% and was prepared by a modification of the preferred technique disclosed in US Patent No. 4,347,158, i.e., modified only in that all process steps were carried out in the absence of any electron donor components. One wt.% solid catalyst slurries were prepared in degassed mineral oil. Prior to each use, the autoclaves were heated to 90°C with a slow nitrogen purge for 30 minutes. After cooling to 30°C, the nitrogen atmosphere was replaced with propylene purge. Alkyl solutions and catalyst slurries were prepared in septum vials in dry boxes (nitrogen atmosphere), purged with nitrogen upon removal, and pressurized slightly to avoid contamination. Alkyl solutions and catalyst slurries were introduced into the reactor using hypodermic syringes, previously cleaned with de-ionized water, dried at 120°C, and purged with nitrogen prior to use. 0.68 ml TEA and 0.58 ml of 1% W/W catalyst slurry (2.5% W/W titanium content) were added to the autoclave. Hydrogen was added to the desired partial pressure. Propylene and butene-1 were introduced using a sight gauge and nitrogen pressure. The reactor content was heated to 60°C (140°F) and maintained while stirring at 500 rpm. After 1 hour, the temperature was lowered and excess monomers were vented. The propylene/butene-1 copolymer was dried under vacuum at 100°C overnight.

The pertinent operating conditions and analyses are shown in Table 1.

### TABLE 1

| Example No. | 1 | 2 | 3 | 4 |
|---|---|---|---|---|
| Reactor Temp.,°C (°F) | 60(140) | 60(140) | 60(140) | 60(140) |
| Reactor Pres, Mpa (psig) | 3.0(400) | 2.8(390) | 1.9(265) | 2.1(295) |
| Propylene, g | 233 | 186 | 140 | 47 |
| Butene-1, g | 60 | 120 | 180 | 300 |
| Hydrogen, MPa(psig) | 0.5(60) | 0.5(60) | 0.55(65) | 0.6(70) |
| Al/Ti, mol ratio | 400 | 400 | 400 | 400 |
| Residence Time, h | 1.0 | 1.0 | 1.0 | 1.0 |
| Catalyst Activity, kg/kg Catalyst/h | 21,600 | 14,800 | 11,400 | 6,000 |
| Butene-1 Content, wt.% | 11.5 | 23.5 | 45.8 | 82.6 |
| Melt Viscosity @ 190.5°C(375°F), mPa s | 7500 | 3700 | 2650 | 3450 |
| Ring & Ball Softening Point, °C(°F) | 143(289) | 131(268) | 108(226) | 87(188) |
| Needle Penetration, mm | 0.5 | 1.2 | 3.2 | 3.0 |
| Open Time, sec. | 0 | 20 | >60 | >60 |
| $\Delta H_f$, cal/g (DSC) | 5.0 | 3.5 | 0.0 | 0.0 |

EXAMPLE 5

A polymer was prepared in a large scale continuous pilot plant operation, wherein monomers, hydrogen and catalyst components were separately and continuously charged to a stirred reactor, the total monomer feed rate corresponding to about a 2-hour residence time in the reactor. The organoaluminium compound of the catalyst system was a heptane solution of triethylaluminum (TEA). The solid supported titanium tetrachloride catalyst component was of the same type as that of Examples 1-4, but it was pumped into the reactor as a 6 wt% mixture in petrolatum. The two catalyst components were added at rates directly proportional to the polymer production rates and in amounts sufficient to maintain the polymer solids concentration in the reactor slurry at about 20.5%. The catalyst productivity (1b polmyer/lb of Ti catalyst component) was calculated from the polymer slurry withdrawal rate, solids content in the slurry, and the titanium catalyst addition rate. The product polymer was separated from unreacted monomer, stabilized with Isonox[R] 129 and then subjected to testing. Table 2 summarizes the pertinent operating conditions and the results of physical testing.

## TABLE 2

| Example No. | 5 |
|---|---|
| Reactor Temperature, °C(°F) | 55(130) |
| Reactor Pressure, MPa (psig) | 2.0(274) |
| Propylene, kg/h (lbs/h ) | 27(60) |
| Butene-1, kg/h (lbs/h ) | 23(51.3) |
| Hydrogen, kg/h (lbs/h ) | 0.037(0.0825) |
| Al/Ti, mol ratio | 671 |
| Residence Time, h | 2.0 |
| Catalyst Activity, kg/kg Catalyst/h | 4,200 |
| Butene-1 Content, wt.% | 34.9 |
| Melt Viscosity @ 190.5°C(375°F),mPa s | 3050 |
| Ring and Ball Softening Point, °C(°F) | 108(225) |
| Needle Penetration, mm | 3.0 |
| Open Time, seconds | >60 |
| ΔHf, cal/g (DSC) | 0.0 |

It is to be understood that many alterations and modifications can be made to the process of this invention. All such departures are considered within the scope of this invention as defined by the specification and appended claims.

## Claims

1. A process for producing substantially amorphous propylene/butene-1 copolymers which comprises reacting from 15 to 90 wt.% propylene and from 10 to 85 wt.% butene-1 at a temperature from 55°C (130°F) to 60°C (140°F) and at a reactor pressure sufficient to maintain the monomers in the liquid phase, in the presence of from 0.7 to 3.0 mol% hydrogen based on the monomer feed to the process and employing as catalyst a composition of:

   (a) a solid catalyst component obtainable by

   (i) co-comminuting magnesium halide support base and aluminium trihalide in a molar ratio from 8:0.5 to 8:3 in the absence of added electron donor and

   (ii) then co-comminuting the product of step (i) in the absence of added electron donor with sufficient titanium tetrahalide to provide a molar ratio of magnesium halide to titanium tetrahalide from 8:0.4 to 8:1;

   and

   (b) a trialkylaluminium co-catalyst component having from 1 to 9 carbon atoms in each alkyl group in a sufficient quantity to provide an Al/Ti ratio in the range from 50:1 to 700:1;

   and recovering a substantially amorphous random propylene/butene-1 copolymer.

2. A process according to claim 1 wherein the catalyst composition comprises magnesium chloride, aluminium trichloride, titanium tetrachloride and triethylaluminium.

3. A process according to claim 1 or 2 conducted at a pressure from 1.5MPa (200 psig) to 3.5MPa (500 psig).

4. A process according to any one of claims to to 3 wherein the magnesium halide to aluminium trihalide ratio is from 8:1 to 8:1.5.

5. A process according to any one of claims 1 to 4 wherein the magnesium halide to titanium tetrahalide ratio is from 8:0.4 to 8:0.6.

6. A process according to any one of claims 1 to 5 wherein the Al/Ti ratio is maintained at from 90:1 to 300:1.

7. A process according to any one of claims 1 to 6 wherein the hydrogen is maintained at from 1.2 to 2.5 mol% based on the total monomer feed to the process.

8. A process according to any one of claims 1 to 7 carried out under continuous conditions at an average residence time of from 1 hour to 3 hours.

9. A process according to any one of claims 1 to 8 wherein the solids content of the reactor slurry is maintained at from 10 wt.% to 50 wt%.

10. A process according to any one of claims 1 to 9 wherein the catalyst composition has an activity of at least 4000 kg polymer/kg Ti catalyst/h.

11. A process according to any one of claims 1 to 10 wherein the recovered copolymer has a melt viscosity between about 1000 and about 8000 mPa s at 190.5°C (375°F).

12. A process according to any one of claims 1 to 11 wherein the recovered copolymer has a ring and ball softening point from 83°C (180°F) to 143°C (290°F).

13. A process according to any one of claims 1 to 12 wherein the recovered copolymer has a needle penetration value between 0.5 and 5.0 mm.

14. A process according to any one of claims 1 to 13 wherein the recovered copolymer has an open time from 10 to 60 seconds.

15. A process according to any one of claims 1 to 14 wherein from 55 to 65 wt.% propylene and from 35 to 45 wt.% butene-1 are reacted and the recovered copolymer has a ring and ball softening point from 93°C (200°F) to 110°C (230°F) and a needle penetration value from 2.0 to 3.0 mm.

16. A process according to any one of claims 1 to 15 wherein the recovered copolymer has a total ash content of less than 1000 ppm.

17. A process according to any one of claims 1 to 16 wherein the recovered copolymer has a titanium content of no more than 4 ppm.

**Patentansprüche**

1. Verfahren zur Herstellung im wesentlichen amorpher Propylen/Buten-1-Copolymere, bei dem 15 bis 90 Gew.% Propylen und 10 bis 85 Gew.% Buten-1 bei einer Temperatur von 55°C (130°F) bis 60°C (140°F), einem Reaktordruck, der ausreicht, um die Monomeren in der flüssigen Phase zu halten, in Gegenwart von bezogen auf das dem Verfahren zugeführte Monomer 0,7 bis 3,0 Mol% Wasserstoff und unter Verwendung einer Zusammensetzung als Katalysator aus
   (a) einer festen Katalysatorkomponente, die erhältlich ist, indem
      (i) eine Magnesiumhalogenidträgerbasis und Aluminiumtrihalogenid in einem Molverhältnis von 8 : 0,5 bis 8 : 3 in Abwesenheit von zugesetztem Elektronendonator gemeinsam zerkleinert werden und
      (ii) anschließend das Produkt aus Stufe (i) gemeinsam in Abwesenheit von zugesetztem Elektronendonator gemeinsam mit ausreichend Titantetrahalogenid zerkleinert wird, um ein Molverhältnis von Magnesiumhalogenid zu Titantetrahalogenid von 8 : 0,4 bis 8 : 1 zu liefern, und
   (b) einer Trialkylaluminium-Cokatalysatorkomponente, die in jeder Alkylgruppe 1 bis 9 Kohlenstoffatome aufweist, in einer ausreichenden Menge, um ein Al/Ti-Verhältnis im Bereich von 50:1 bis 700:1 zu liefern,
umgesetzt werden und ein im wesentlichen amorphes, statistisches Propylen/Buten-1-Copolymer gewonnen wird.

2. Verfahren nach Anspruch 1, bei dem die Katalysatorzusammensetzung Magnesiumchlorid, Aluminiumtrichlorid, Titantetrachlorid und Triethylaluminium umfaßt.

3. Verfahren nach Anspruch 1 oder 2, das bei einem Überdruck von 1,5 MPa (200 psig) bis 3,5 MPa (500 psig) durchgeführt wird.

4. Verfahren nach einem der Ansprüche 1 bis 3, bei dem das Magnesiumhalogenid/Aluminiumtrihalogenid-Verhältnis 8 : 1 bis 8 : 1,5 beträgt.

5. Verfahren nach einem der Ansprüche 1 bis 4, bei dem das Magnesiumhalogenid/Titantetrahalogenid-Verhältnis 8 : 0,4 bis 8 : 0,6 beträgt.

6. Verfahren nach einem der Ansprüche 1 bis 5, bei dem das Al/Ti-Verhältnis bei 90 : 1 bis 300 : 1 gehalten wird.

7. Verfahren nach einem der Ansprüche 1 bis 6, bei dem der Wasserstoff bezogen auf das dem Verfahren insgesamt zugeführte Monomer bei 1,2 bis 2,5 Mol% gehalten wird.

8. Verfahren nach einem der Ansprüche 1 bis 7, das unter kontinuierlichen Bedingungen bei einer durchschnittlichen Verweilzeit von 1 bis 3 Stunden durchgeführt wird.

9. Verfahren nach einem der Ansprüche 1 bis 8, bei dem der Feststoffgehalt der Reaktoraufschlämmung bei 10 Gew.% bis 50 Gew.% gehalten wird.

10. Verfahren nach einem der Ansprüche 1 bis 9, bei dem die Katalysatorzusammensetzung eine Aktivität von mindestens 4000 kg Polymer/kg Ti-Katalysator/h aufweist.

11. Verfahren nach einem der Ansprüche 1 bis 10, bei dem das gewonnene Copolymer bei 190,5°C (375°F) eine Schmelzviskosität zwischen etwa 1000 und etwa 8000 mPas hat.

12. Verfahren nach einem der Ansprüche 1 bis 11, bei dem das gewonnene Copolymer einen Ring- und Kugelerweichungspunkt von 83°C (180°F) bis 143°C (290°F) hat.

13. Verfahren nach einem der Ansprüche 1 bis 12, bei dem das gewonnene Copolymer einen Nadeleindringwert zwischen 0,5 und 5,0 mm hat.

14. Verfahren nach einem der Ansprüche 1 bis 13, bei dem das gewonnene Copolymer eine offene Zeit von 10 bis 60 Sekunden hat.

15. Verfahren nach einem der Ansprüche 1 bis 14, bei dem 55 bis 65 Gew.% Propylen und 35 bis 45 Gew.% Buten-1 umgesetzt werden und das gewonnene Copolymer einen Ring- und Kugelerweichungspunkt von 93°C (200°F) bis 110°C ( 230°F) sowie einen Nadeleindringwert von 2,0 bis 3,0 mm hat.

16. Verfahren nach einem der Ansprüche 1 bis 15, bei dem das gewonnene Copolymer einen Gesamtaschegehalt von weniger als 1000 ppm hat.

17. Verfahren nach einem der Ansprüche 1 bis 16, bei dem das gewonnene Copolymer einen Titangehalt von nicht mehr als 4 ppm hat.

**Revendications**

1. Procédé de production de copolymères propylène/butène-1 sensiblement amorphes, dans lequel on fait réagir 15 à 90 % en poids de propylène et 10 à 85 % en poids de butène-1 à une température de 55°C (130°F) à 60°C (140°F) et à une pression de réacteur suffisante pour maintenir les monomères en phase liquide, en présence de 0,7 à 3,0 mol % d'hydrogène sur la base de la charge de monomères introduite dans le procédé, et en utilisant comme catalyseur une composition de :

(a) un composant catalytique solide pouvant être obtenu

(i) en broyant conjointement une base de support du type halogénure de magnésium avec un trihalogénure d'aluminium en un rapport molaire de 8:0,5 à 8:3 en l'absence de donneur d'électrons ajouté et

(ii) en broyant ensuite conjointement le produit de l'étape (i), en l'absence de donneur d'électrons ajouté, avec suffisamment de tétrahalogénure de titane pour établir un rapport molaire de l'halogénure de magnésium au tétrahalogénure de titane de 8:0,4 à 8:1 ;

et

(b) un composant co-catalytique du type triallylaluminium dont chaque groupe allyle compte 1 à 9 atomes de carbone, en une quantité suffisante pour établir un rapport molaire Al/Ti compris dans l'intervalle de 50:1 à 700:1 ;

et l'on recueille un copolymère statistique propylène/butène-1 sensiblement amorphe.

2. Procédé selon la revendication 1, dans lequel la composition de catalyseur comprend du chlorure de magnésium, du trichlorure d'aluminium, du tétrachlorure de titane et du triéthylaluminium.

3. Procédé selon la revendication 1 ou 2, conduit à une pression de 1,5 MPa (200 psig) à 3,5 MPa (500 psig).

4. Procédé selon l'une quelconque des revendications 1 à 3, dans lequel le rapport de l'halogénure de magnésium au trihalogénure d'aluminium est de 8:1 à 8:1,5.

5. Procédé selon l'une quelconque des revendications 1 à 4, dans lequel le rapport de l'halogénure de magnésium au tétrahalogénure de titane est de 8:0,4 à 8:0,6.

6. Procédé selon l'une quelconque des revendications 1 à 5, dans lequel le rapport Al/Ti est maintenu entre 90:1 et 300:1.

7. Procédé selon l'une quelconque des revendications 1 à 6, dans lequel l'hydrogène est maintenu entre 1,2 et 2,5 mol % sur la base de la charge totale de monomères introduite dans le procédé.

8. Procédé selon l'une quelconque des revendications 1 à 7, conduit en continu avec un temps de séjour moyen de 1 heure à 3 heures.

9. Procédé selon l'une quelconque des revendications 1 à 8, dans lequel la teneur en matière sèche de la suspension du réacteur est maintenue entre 10 % en poids et 50 % en poids.

10. Procédé selon l'une quelconque des revendications 1 à 9, dans lequel la composition de catalyseur a une activité d'au moins 4000 kg de polymère/kg de catalyseur Ti/h.

11. Procédé selon l'une quelconque des revendications 1 à 10, dans lequel le copolymère recueilli a une viscosité à l'état fondu comprise entre environ 1000 et environ 8000 mPa.s à 190,5°C (375°F).

12. Procédé selon l'une quelconque des revendications 1 à 11, dans lequel le copolymère recueilli a un point de ramollissement par la méthode "bille et anneau" de 83°C (180°F) à 143°C (290°F).

13. Procédé selon l'une quelconque des revendications 1 à 12, dans lequel le copolymère recueilli a une valeur de pénétration d'aiguille comprise entre 0,5 et 5,0 mm.

14. Procédé selon l'une quelconque des revendications 1 à 13, dans lequel le copolymère recueilli a un temps-limite d'adhérence de 10 à 60 secondes.

15. Procédé selon l'une quelconque des revendications 1 à 14, dans lequel on fait réagir 55 à 65 % en poids de propylène et 35 à 45 % en poids de butène-1, et le copolymère recueilli a un point de ramollissement par la méthode "bille et anneau" de 93°C (200°F) à 110°C (230°F) et une valeur de pénétration d'aiguille de 2,0 à 3,0 mm.

16. Procédé selon l'une quelconque des revendications 1 à 15, dans lequel le copolymère recueilli a une teneur totale en cendres inférieure à 1000 ppm.

17. Procédé selon l'une quelconque des revendications 1 à 16, dans lequel le copolymère recueilli a une teneur en titane d'au plus 4 ppm.